# EUROPÄISCHE PATENTSCHRIFT

(11) **EP 2 454 124 B1**
(45) Veröffentlichungstag und Bekanntmachung des Hinweises auf die Patenterteilung: **24.07.2013**
(21) Anmeldenummer: 10726462.4
(22) Anmeldetag: 09.06.2010
(51) Int. Cl.: B60R 7/02, B60N 3/10

(54) **ADAPTIVE ABLAGE**
ADAPTIVE STORAGE AREA
VIDE-POCHES ADAPTATIF

(30) Priorität: 16.07.2009 DE 102009033415
(43) Veröffentlichungstag der Anmeldung: 23.05.2012
(73) Patentinhaber: Lisa Dräxlmaier GmbH, 84137 Vilsbiburg (DE)
(72) Erfinder: KREIS, Raimund, 84137 Vilsbiburg (DE)
(74) Vertreter: HOFFMANN EITLE
(86) Internationale Anmeldenummer: PCT/EP2010/058059
(87) Internationale Veröffentlichungsnummer: WO 2011/006714

(56) Entgegenhaltungen:
- WO-A1-2006/100390
- DE-A1- 2 342 573
- DE-A1- 10 326 883
- DE-A1-102008 021 679
- DE-A1-102008 024 691

## Beschreibung

Die vorliegende Erfindung betrifft Ablagen, die insbesondere in Fahrzeugen und im Speziellen in Automobilen zum Einsatz kommen. Der Einsatz ist aber auch in anderen Fahrzeugen, wie Luftfahrzeugen und Wasserfahrzeugen denkbar. Als Ablage im Sinne der vorliegenden Erfindung sind einerseits beliebige offene Behältnisse zu verstehen, die dazu dienen Gegenstände hineinzulegen bzw. abzulegen und andererseits frei zugängliche Flächen, die es ermöglichen etwas ab- bzw. aufzulegen. Insbesondere betrifft die vorliegende Erfindung dabei Ablagen im Bereich des Fahrgast- oder Kofferraums der Fahrzeuge.

Solche Ablagen sind in großer Vielfalt bekannt. Eine Ablage mit den Merkmalen im Oberbegriff von Anspruch 1 ist aus der DE-A-103 26 883 bekannt. Darüber hinaus offenbart die WO-A-2006/100390 A1 eine Ablage mit einem Rahmen, der gegenüberliegende Schenkel aufweist und eine Öffnung definiert sowie einem Stab, der sich von einem der gegenüberliegenden Schenkel des Rahmens die Öffnung überspannend zu dem anderen Schenkel erstreckt und als bistabiles System ausgebildet ist, so dass er zwischen einer Ausgangslage und einer Endlage bewegt werden kann.

Insbesondere vor dem Hintergrund der zu erwartenden Einführung von Elektrofahrzeugen ist ein zunehmender Trend in Richtung Gewichts- und Bauraumeffektive Fahrzeugeinrichtungen zu verzeichnen.

Die Aufgabe der vorliegenden Erfindung beruht darin eine Ablage zu schaffen, die diesem Trend genügt und damit eine Ablage, die adaptiv an die Bedürfnisse des Nutzers anpassbar ist, Gewicht einsparend ist, kostengünstig hergestellt werden kann und ein ästhetisch anspruchsvolles Design ermöglicht.

Diese Aufgabe wird durch eine Ablage mit den Merkmalen des Anspruchs 1 gelöst. Vorteilhafte Weiterbildungen sind in den Unteransprüchen genannt.

Der vorliegenden Erfindung liegt der Gedanke zu Grunde wenigstens zwei Stäbe, die jeweils als bistabiles System ausgestaltet sind, eine von einem Rahmen definierte Öffnung überspannend vorzusehen, wobei die Stäbe jeweils eine stabile Ausgangs- und Endlage aufweisen, zwischen denen sie bewegbar sind. So kann beispielsweise ein Stab, der sich in der Endlage befindet ein offenes Behältnis bilden. Befinden sich beispielsweise zwei oder mehr der Stäbe, die direkt nebeneinander angeordnet sind, in der Endlage, ergibt sich ein entsprechend größeres Behältnis. Sind beispielsweise drei oder mehr Stäbe vorgesehen, können die jeweils außen angeordneten Stäbe in die Endlage bewegt werden, während der sich in der Mitte befindliche oder die sich in der Mitte befindlichen Stäbe in der Ausgangslage verbleiben, wodurch zwei getrennte offene Behältnisse geschaffen werden können. Damit wird durch die vorliegende Erfindung eine leicht auf die Bedürfnisse des Nutzers adaptierbare Ablage geschaffen, die kostengünstig hergestellt werden kann und ein ansprechendes äußeres Design ermöglicht. Zugleich kann der Aufbau mit geringerem Gewicht ausgestaltet werden und ist daher, insbesondere bei Einsatz in Fahrzeugen und dort Elektrofahrzeugen, energieeffizient.

Dementsprechend schafft die vorliegende Erfindung eine Ablage der eingangs genannten Art, die einen Rahmen umfasst. Der Rahmen kann dabei beispielsweise in die Instrumententafel (I-Tafel) des Fahrzeugs integriert (einstückig oder verbunden) sein. Der Rahmen definiert eine Öffnung in beliebiger Form. Die Öffnung wird begrenzt durch je zwei gegenüberliegende Schenkel bzw. Kanten. Zwischen zwei der gegenüberliegenden Schenkel sind mehrere (wenigstens zwei) Stäbe angeordnet, die sich von einem der gegenüberliegenden Schenkel des Rahmens zu dem anderen Schenkel erstrecken. Die Stäbe können dabei im Querschnitt rund (kreisrund, oval, etc.) oder eckig (dreieckig, quadratisch, rechteckig, mehreckig, etc.) und/oder flach (d. h. breiter als hoch) ausgestaltet sein. Weiter können die Stäbe unterschiedliche Profile (Keilprofil, etc.) oder uneinheitliche Konturen aufweisen, um die Biegelinie zu beeinflussen. Ferner ist auch denkbar, zwei unterschiedliche Materialien in einander laufen zu lassen, um insbesondere den Härtegrad der Auflage variabel zu gestalten. Die Stäbe wie auch der Rahmen können aus Kunststoff oder Metall gebildet sein. Gemäß einer bevorzugten Ausführungsform verlaufen die mehreren Stäbe parallel zueinander. Es ist jedoch auch denkbar, dass sich die Stäbe in einem Winkel (≠ 0°, 180°) zueinander erstrecken. Die Stäbe sind jeweils als bistabiles System ausgebildet. Unter einem bistabilen System ist dabei zu verstehen, dass die Stäbe jeweils (nur) zwei mögliche Zustände, eine Ausgangslage und eine Endlage einnehmen können, aber (nur) durch einen äußeren Impuls vom einen in den anderen Zustand überführbar sind. Damit die oben erwähnte Adaptivität erreichbar wird, sind die Stäbe unabhängig voneinander zwischen der Ausgangslage und der Endlage bewegbar. Bei der Auslegung des bistabilen Systems helfen die Euler'schen Knickfälle und die Balkentheorie.

Um den Boden des offenen Behältnisses zu bilden und gleichzeitig für ein ästhetisch anspruchsvolles äußeres Erscheinungsbild der Ablage zu gewährleisten, ist es gemäß einer Ausführungsform bevorzugt, eine Bespannung vorzusehen, die wenigstens im Bereich der durch den Rahmen definierten Öffnung angeordnet ist, d. h. die durch den Rahmen definierte Öffnung verschließt. Rein beispielhaft sind hier Textilien, Planware (eine ein- oder mehrschichtige Polymerlage aus PU und/oder PVC), Leder, etc. denkbar. Bevorzugterweise wird auch der Rahmen von der Bespannung überspannt und ggf. auch das den Rahmen umgebende Bauteil, d. h. das Bauteil, in den der Rahmen integriert ist (z. B. die I-Tafel). Dabei ist es für eine geschlossene Oberfläche besonders bevorzugt die Bespannung über den Stäben anzuordnen, d. h. die Bespannung liegt auf den Stäben auf. Es ist jedoch auch denkbar die Bespannung unterhalb der Stäbe anzuordnen. Ist die Bespannung über den Stäben angeordnet, so ist in der Regel eine Verbindung der Bespannung mit den Stäben nicht erforderlich, kann aber dennoch vorgesehen werden. Ist die Bespannung unterhalb der Stäbe angeordnet, so empfiehlt sich in der Regel eine Verbindung der Bespannung mit den Stäben. Beispielsweise könnten die Stäbe auch in die Bespannung eingearbeitet, z. B. eingenäht oder verklebt sein. Ist insgesamt keine Bespannung vorgesehen, so ist in der Regel unterhalb der durch den Rahmen gebildeten Öffnung ein vorzugsweise formstabiler Boden oder eine Rückwand ausgebildet.

Um eine faltenfreie Oberfläche der Bespannung in beliebigen Zuständen der Stäbe zu gewährleisten, ist die Bespannung vorzugsweise reversibel dehnbar (elastisch verformbar) ausgestaltet. Die Bespannung sorgt ferner für Abriebfestigkeit und trägt zur Formstabilität bei.

Ferner können die Stäbe, oder deren Bespannung aus im Interieur bekannten Dekormaterialien, z.B. Furnier, Folie, Leder, bedruckte Oberflächen etc. bestehen, sofern sie die obigen Eigenschaften beinhalten oder entsprechende Scharnierfunktionen vorgesehen sind.

Darüber hinaus kann der Impuls um die Stäbe von der Ausgangslage in die Endlage bzw. umgekehrt zu bringen manuell erfolgen. Hierbei ist es bevorzugt eine Handhabe vorzusehen, die eine manuelle Bewegung der Stäbe ermöglicht. Ist eine Bespannung über den Stäben vorgesehen, so kann die Handhabe an der Bespannung vorgesehen werden und z. B. durch angenähte Zuglaschen/-ösen/-schlaufen erfolgen. Dies gilt auch bei Integrieren der Stäbe in die Bespannung, wie es oben erwähnt wurde. Ist die Bespannung hingegen unterhalb der Stäbe angeordnet, so kann die Handhabe durch die Stäbe selbst oder aber durch eine entsprechende Ausgestaltung an den Stäben erzielt werden. Ferner kann bei drehbar gelagerten Stäben, ein Stellmechanismus z.B. durch ein Rad oder einen Hebel an der Lagerung erfolgen.

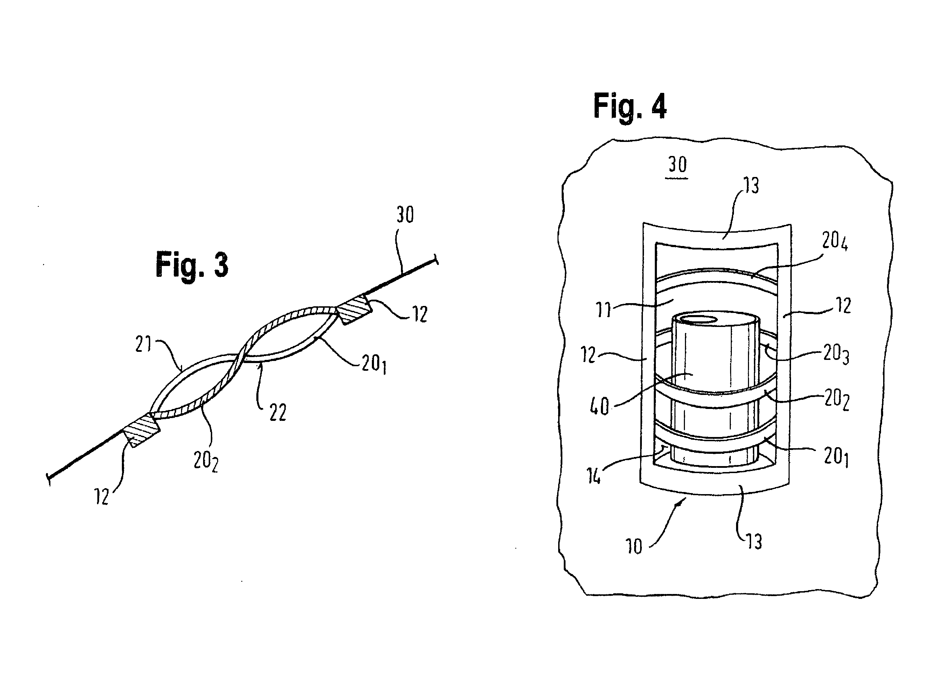

Ferner ist es vielfach vorteilhaft, wenn mit dem Rahmen verbunden oder daran anschließend eine Rückwand ausgebildet ist, die konkav gewölbt bzw. nach hinten ausgeformt ausgestaltet sein kann. Diese Rückwand kann notwendig sein, um die bistabilen Stäbe in einer der beiden stabilen Lagen, d. h. der Ausgangslage oder der Endlage aufzunehmen. Dabei ist es denkbar, dass der Wechsel von einer Lage in die andere Lage durch S-förmiges Durchschnappen der Stäbe (siehe auch Figur 3 später) erfolgt. Neben konkav gewölbten Rückwänden sind jedoch auch gerade oder konvex gewölbte Rückwände denkbar, aus denen die Stäbe zur Bildung einer Ablage herausgeklappt werden. Unabhängig von der Gestalt der Rückwand ist es aus designerischen Gründen oft gewünscht Ablagen oberflächenbündig versenkbar zu gestalten. Um dies zu erzielen können die Stäbe an der Rückwand eng anliegend oder oberflächenbündig einliegend gestaltet sein, müssen für den Nutzer aber bedienbar bleiben. Hierzu ist es denkbar eine oder mehrere Mulden, vorzugsweise zwei Mulden in der Rückwand vorzusehen, die das Herausziehen der Stäbe beim Anliegen an der Rückwand erleichtern. Die Mulden können als Fingermulden oder Handmulde ausgeführt sein, um einen Eingriff zwischen dem Stab und der Rückwand zu gewährleisten.

Als weitere Funktion der Mulde kann diese als Aufnahme für entsprechend zur Rückwand vorragende Objekte der Stäbe dienen, z. B. Gumminoppen in halbzylindrischer Form. Auch kann die Ausbuchtung der Mulde selbst Flaschen am Verrutschen hindern. Die Mulde kann über die gesamte Erstreckung des Rahmens zwischen einander gegenüberliegenden Schenkeln ausgebildet oder nur lokal eingebracht sein. Insbesondere bei einer später beschriebenen Verstellbarkeit der Stäbe entlang der Schenkel ist es bevorzugt die Mulde bzw. die Mulden über die gesamte Länge der Schenkel vorzusehen. Ist die Rückwand konkav gewölbt, ist es vorteilhaft, dass die Mulde bzw. die Mulden idealerweise zwischen dem Scheitelpunkt des gebogenen Stabs und der seitlichen Führung des Stabs liegen. Durch das Vorspannen und das S-förmigen Durchschnappen der Stäbe sind die Betätigungskräfte dort am geringsten, so dass ein einfaches Bewegen der Stäbe zwischen den Lagen erzielt wird.

Zur Führung der Stäbe ist es denkbar, insbesondere bei Verwendung konkav gekrümmter Rückwände lediglich eine drehbare Lagerung der jeweiligen Enden der Stäbe vorzusehen. Als einfachste Art haben sich hierbei Zylinder erwiesen, die an die Stäbe angespritzt oder mit diesen anderweitig verbunden, z. B. verklebt, sein können. Die Zylinder können in entsprechenden Hohlkehlen im Rahmen oder gegebenenfalls der Rückwand bzw. zwischen Rahmen und Rückwand geführt sein. Durch die Vorspannung verspreizen sich die Stäbe quer zu den länglichen Führungen, die entsprechend parallel zur Mittelachse der Zylinder verlaufen, so dass sie Kräfte in Führungsrichtung aufnehmen können.

Der Schwenkwinkel von der Ausgangs- in die Endlage bzw. umgekehrt ist in der Regel deutlich kleiner als 180°. Um ein Herausreißen der Zylinder aus der Führung bei Missbrauch oder im Crashfall zu verhindern, kann die Führung den Zylinder um mehr als 180° umschließen. Um einen Austausch der Stäbe von der Sichtseite oder zum Montieren bei oben und unten geschlossenen Führungen zu ermöglichen, kann der Zylinder beidseitig abgeflacht sein, um in einer Zwischenstellung zwischen der Ausgangs- und der Endlage ein Herausführen des Zylinders aus der Führung zu gestatten. In der Zwischenposition, die auch als Montageposition bezeichnet werden kann, ist folglich ein Entnehmen der Stäbe möglich. Diese Position wird beim Durchschnappen der Stäbe von der Ausgangs- in die Endlage und umgekehrt durchlaufen, wobei Querkräfte, wie oben beschrieben, für das Andrücken der Zylinder in die Führungen sorgen und so ein Herausrutschen verhindert wird. In den stabilen Lagen, der Ausgangs- und der Endlage werden die Zylinder sicher umschlossen und dadurch am Herausrutschen gehindert. Alternativ sind Schnappverbindungen denkbar, d. h. die Führung ist als Schnappverbindung mit einem Umfangswinkel von wenig größer als 180° in Verbindung mit Vollzylindern ausgebildet, wobei die Zylinder unter "Aufbiegen" der Führung in die Führung einschnappen und anschließend in der Führung gehalten werden.

Mit Vorteil verlaufen die Führungen über die gesamte Länge des bzw. der Schenkel des Rahmens. Dadurch kann erreicht werden, dass sich die Stäbe relativ zueinander in der Führung verschieben und entsprechend optimal an die gewünschte Konfiguration und Ausgestaltung anpassen. Um diese Flexibilität weiter zu erhöhen, kann es bevorzugt sein unterschiedliche Stäbe zu verwenden. Beispielsweise kann ein breiter Stab mit flexiblem Boden, der in einer ausgeklappten Lage (Endlage) eine blickdichte Box bildet, vorgesehen sein. Dabei ist zu beachten, dass das Widerstandsmoment gegen Biegung (axiales Flächenträgheitsmoment) bei rechteckigen Querschnitten linear mit der Breite und kubisch mit der Materialstärke zunimmt. Ist eine Verringerung der Materialstärke nicht mehr sinnvoll können breite Stäbe gelocht bzw. durchbrochen werden, um die Betätigungskräfte gering zu halten. Eine dünne flexible Bespannung des Stabs mit Folien, Stoffen etc. kann für Blickdichtigkeit sorgen. Ferner oder alternativ kann ein schmaler Stab mit flexiblem Boden vorgesehen sein, der über dem breiten Stab angeordnet sein kann und als Deckel für das dann geschaffene Behältnis durch den breiten Stab dienen kann. Alternativ können der breite Stab und der schmalere Stab jeweils mit flexiblem Boden oben offene Ablagen bilden. Die obige Konfiguration ergibt sich insbesondere dann, wenn die Schenkel des Rahmens vertikal verlaufen (siehe später). Alternativ oder zusätzlich kann ein weiterer schmaler Stab ohne flexiblen Boden vorhanden sein, der als Halteband zum Einklemmen von Gegenständen dienen kann.

Bei kontinuierlich durchgehender Führung entlang der Schenkel ist es ferner denkbar die Position der einzelnen Stäbe durch Verschieben entlang der Führung zu verändern und somit eine optimale Anpassung vorzunehmen. Bei Stäben mit flexiblem Boden, d. h. wobei der Boden beispielsweise aus einem elastischen Material gebildet ist, das sich beim Ausklappen des Stabs dehnt und einen Fachboden bildet, ist es zu diesem Zweck bevorzugt den flexiblen Boden an einer Seite relativ zu den Führungen bzw. den Stäben zu halten, so dass er sich nicht mit den Führungen bzw. Enden des Stabes mitdreht, sondern in jedem Fall entlang der Rückwand gehalten wird.

Ferner wird bei Verwendung einer geraden Rückwand das S-förmige Durchschnappen der vorgespannten Stäbe behindert. Um dies zu verhindern, könnte die Rückwand S-förmig gestaltet werden, so dass sich die Biegeelemente in einer Zwischenstellung an die Rückwand anlegen kann. Es besteht jedoch die Gefahr, dass der Stab aus dieser Stellung zurückschnappt. Zusätzliche lösbare Halteelemente wären dann notwendig. Eine Lösung dieser Problematik besteht darin die an und für sich nur oben beschriebene drehbare Lagerung der bistabilen Stäbe ein- oder beidseitig zusätzlich verschiebbar zu gestalten. Dies ist deshalb notwendig, weil die Stäbe nicht wesentlich längs dehnbar, sondern nur biegeelastisch sind. Dabei kann entweder der Stab relativ zu dem drehbaren Lager verschieblich gehalten sein, d. h. ein Ende des Stabs kann sich relativ zur Lagerung verschieben oder aber das Lager selbst ist verschieblich gestaltet.

Alternativ zur obigen manuellen Betätigung ist es jedoch auch denkbar zwischen den stabilen Zuständen (Ausgangslage und Endlage) automatisch umzuschalten. Mit anderen Worten ist es denkbar, dass die Ablage eine Stelleinrichtung zum automatischen Bewegen der Stäbe zwischen der Ausgangslage und der Endlage umfasst. Diese kann beispielsweise einen Antrieb umfassen, über den wenigstens ein Ende des jeweiligen Stabs oder dessen Lagerung in Längsrichtung des jeweiligen Stabs verschiebbar ist und/oder um eine Achse senkrecht zur Längsrichtung bzw. -erstreckung verdrehbar ist, um den Stab zwischen der Ausgangslage und der Endlage zu bewegen.

Verfügen in einer Ausführungsform jeweils beide Stabenden über Drehantriebe, die gleichläufig bewegt und/oder gehemmt werden, sind S-förmige Biegelinien als Zwischenstellung zwischen den stabilen Endlagen möglich. Durch bekannte Rastungen oder Rastmechanismen in den Lagerungen der Stabenden sind diese Zwischenstellungen auch bei rein manuell betätigbaren Ablagen möglich.

Alternativ ist es auch denkbar die Stäbe zumindest teilweise aus einem Formgedächtnismaterial oder Formgedächtnislegierungen zu bilden. Die Stelleinrichtung umfasst in diesem Fall eine Aktivierungseinrichtung zur Aktivierung des Formgedächtnismaterials, um die Stäbe zwischen der Ausgangslage und der Endlage zu bewegen.

Bei der automatischen Schaltung der jeweiligen Stäbe ist es besonders bevorzugt, dass die Stelleinrichtung ein Eingabegerät umfasst, über das einzelne Stäbe unabhängig voneinander auswähl- und bewegbar sind und/oder vordefinierte Stellungsmuster der Stäbe zueinander auswählbar sind. D. h. der Nutzer kann einzelne Stäbe unabhängig voneinander aus der Ausgangslage in die Endlage bewegen, um eine entsprechende Ablage, die seinen Wünschen entspricht zu bilden. Alternativ oder zusätzlich besteht die Möglichkeit vorgegebene Stellungsmuster auszuwählen. Beispielsweise können bei drei Stäben in einem vordefinierten Stellungsmuster alle Stäbe in die Endlage gebracht werden oder gemäß einem anderen Muster nur die äußeren Stäbe während der mittlere Stab in der Ausgangslage verbleibt, um, wie es oben erwähnt wurde, zwei separierte Ablagefächer zu bilden. In einem noch weiteren Stellungsmuster könnten der mittlere und ein äußerer Stab in die Endlage bewegt werden, während der verbleibende Stab in der Ausgangslage bleibt, usw.

Gemäß einer bevorzugten und besonders kostengünstigen und montagefreundlichen Ausführungsform der vorliegenden Erfindung sind der Rahmen und die Stäbe einstückig, beispielsweise über das In- mold Assembly Verfahren ausgebildet, wobei sich hierbei der Rahmen und die Stäbe in einem Prozessschritt beim Spritzgießen gelenkig zueinander angeordnet herstellen lassen.

Alternativ ist es jedoch auch denkbar die Stäbe separat vom Rahmen auszubilden. Bei dieser Ausführungsform ist es insbesondere bevorzugt eine Spannvorrichtung vorzusehen, über die die Vorspannung der Stäbe gegenüber dem Rahmen einstellbar ist. Dies ermöglicht es ggf. bei Vorsehen einer Bespannung auch die Spannung der Bespannung einstellen zu können, um ggf. geringfügige Toleranzen ausgleichen zu können. Die Trennung von Rahmen und Stäben mit einer einstellbaren Vorspannung der Stäben hat den Vorteil, dass die Wölbung/Länge der Stäbe unabhängig von einer möglichen Krümmung der Ebene, die durch die vom Rahmen definierte Öffnung beschrieben wird, eingestellt werden kann. Bei einer einstückigen Ausgestaltung hingegen wird beispielsweise die Tiefe der Ablagefläche durch die Krümmung der von der Öffnung beschriebenen gekrümmten Ebene vorgegeben. Darüber hinaus ist es bei der separaten Ausgestaltung von Rahmen und Stäben möglich durch geeignete Führung und Lagerung der Stabenden neben einer Biegelinie erster Ordnung auch Biegelinien höherer Ordnung der Stäbe in der Endlage bzw. Ausgangslage zu realisieren. Beispielhaft soll hier auf die bereits oben beschriebene S- förmige Biegelinie verwiesen werden.

Um die Ablage zu versteifen und zur Verbesserung der Haptik, können der Rahmen und/oder die Stäbe mit einer Schaumstoffschicht (z. B. PU-, EPP- oder EPS- Schaum) umschäumt sein. Ferner ist denkbar, dass der Rahmen und / oder die Stäbe selbst, aus Schaumstoff bestehen.

Zusätzlich kann es bevorzugt sein, eine die Schaumstoffschicht überdeckende Beschichtung im Bereich des Rahmens und/oder der Stäbe vorzusehen, wie beispielsweise eine Makrolon® (PC-Schicht), die als Dekor- und/oder Verschleißschutzschicht dient.

Gemäß einer Ausführungsform der vorliegenden Erfindung verlaufen die gegenüberliegenden Schenkel des Rahmens in horizontaler Richtung. D. h. ihre Haupt- bzw. Längserstreckung verläuft im Wesentlichen in horizontaler Richtung (von links nach rechts oder umgekehrt). Diese Ausgestaltung kommt insbesondere dann zum Einsatz, wenn die vorliegende Erfindung ein offenes Ablagebehältnis bildet.

Andererseits ist es jedoch auch denkbar die Ablage zur Aufnahme eines Getränkbehälters, z. B. einer Flasche, einer Dose oder eines Bechers, auszugestalten. Bei dieser alternative Ausgestaltung verlaufen die gegenüberliegenden Schenkel des Rahmens in vertikaler Richtung, d. h. sie erstrecken sich im Wesentlichen von unten nach oben bzw. umgekehrt. Letztere Ausgestaltung ist insbesondere ohne Bespannung vorteilhaft, wobei unterhalb der Öffnung des Rahmens in diesem Fall ein fester Boden vorgesehen werden könnte. Alternativ kann auch ein flexibler Boden mit Hilfe einer Bespannung gebildet werden. Sofern die Bespannung die Stäbe nicht miteinander verbindet, sondern nur den jeweiligen Stab mit dem Rahmen, kann mit dem Auswölben des Stabes ein Boden zwischen dem Stab und dem Rahmen bzw. der Rückwand aufgespannt werden.

Um in einem Fall, in dem sich alle Stäbe in der Ausgangslage befinden, eine geschlossene, gleichmäßige und ästhetisch ansprechende Oberflächenstruktur schaffen zu können, ist es bevorzugt, dass die Stäbe in ihrer Ausgangslage in einer gekrümmten Ebene liegen, die durch die vom Rahmen definierte Öffnung beschrieben wird. Insbesondere, wenn eine Bespannung über den Stäben und vorzugsweise dem Rahmen vorgesehen ist, ergibt sich in diesem Fall eine geschlossene Oberfläche entlang der gekrümmten Ebene bzw. parallel dazu. Insbesondere bei der Integration in einer I-Tafel ergibt sich damit eine aussparungsfreie Außenkontur der I-Tafel im Bereich der Ablage, wenn sich alle Stäbe in der Ausgangslage befinden, während durch Bewegen einzelner Stäbe oder aller Stäbe in die Endlage ein offenes Behältnis zur Ablage geschaffen werden kann.

Weitere Vorteile und Merkmale der vorliegenden Erfindung, die einzeln oder in Kombination mit einem oder mehreren der oben genannten Merkmale umgesetzt werden können, insofern sich die Merkmale nicht widersprechen, sind aus der folgenden Beschreibung beispielhafter Ausführungsformen ersichtlich. Diese Beschreibung erfolgt unter Bezugnahme auf die begleitenden Zeichnungen, in denen:
Figur 1 eine schematische Perspektive einer Ablage gemäß einer ersten Ausführungsform der Erfindung zeigt;
Figur 2 einen Querschnitt entlang der Linie 2-2 in Figur 1 zeigt;
Figur 3 einen Querschnitt einer alternativen Ausführungsform ähnlich der Darstellung in Figur 2 zeigt; und
Figur 4 eine weitere alternative Ausführungsform der vorliegenden Erfindung in einer perspektivischen Draufsicht zeigt.
Figur 5 zeigt eine weitere alternative Ausgestaltung der vorliegenden Erfindung in einer perspektivischen Ansicht;
Figur 6a-c zeigen die drehbare Lagerung eines Stabs in schematischen Querschnittsansichten;
Figur 7 zeigt eine Querschnittsansicht durch einen Stab mit flexiblem Boden in a) Endlage und b) Ausgangslage, wobei in Figur 7c die Festlegung des flexiblen Bodens schematisch dargestellt ist;
Figur 8 schematisch eine Querschnittsansicht zur verschieblichen Lagerung wenigstens eines Endes der Stäbe mit a) relativ zum Lager verschieblichem Ende des Stabs und b) verschieblichem Lager.

In den folgenden Zeichnungen sind gleich oder vergleichbare Elemente durch die gleichen Bezugsziffern gekennzeichnet.

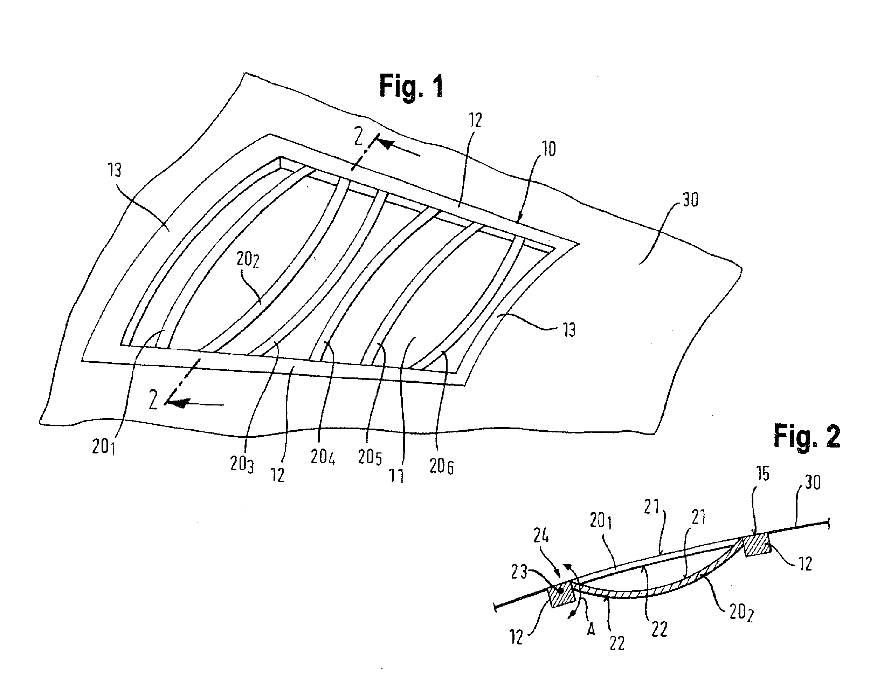

Figur 1 zeigt eine Ablage gemäß der vorliegenden Erfindung in einer ersten Ausgestaltung.

Die Ablage weist einen Rahmen 10 und mehrere Stäbe 20₁ bis 20₆ auf. Der Rahmen 10 ist in eine Instrumententafel 30 integriert. D. h. er kann in der Instrumententafel 30 angeordnet mit dieser verbunden oder einstückig mit dieser ausgestaltet sein. Der Rahmen 10 weist zwei gegenüberliegende Schenkel 12 und zwei weitere gegenüberliegende Schenkel 13 auf. Die Schenkel 13 verbinden dabei jeweils die gegenüberliegenden Schenkel 12. Der Rahmen 10 definiert eine Öffnung 11, die durch die Schenkel 12 und 13 begrenzt wird. Darüber hinaus beschreibt die Öffnung 11 in der Ausführungsform in den Figuren 1 und 2 eine gewölbte Ebene, wie es z. B. aus dem Schnitt in Figur 2 ersichtlich ist, wobei die Krümmung der Ebene im Wesentlichen an die durch die Instrumententafel 30 vorgegeben Außenkontur angepasst ist. Der Rahmen 10 kann aus Kunststoff oder einem Metall hergestellt sein.

Bei der dargestellten Ausführungsform umfasst die Ablage ferner sechs Stäbe, die gleich oder unterschiedlich ausgestaltet sein können. Insbesondere bevorzugt ist es, wie bei der dargestellten Ausführungsform, dass sich die Stäbe im Wesentlichen parallel zueinander erstrecken. Ferner erstrecken sich die Stäbe hier von einem Schenkel 12 zu dem gegenüberliegenden Schenkel 12 und damit im Wesentlichen auch parallel zu den die Schenkel 12 verbindenden Schenkeln 13. Es sind jedoch auch diesbezüglich andere Ausgestaltungen denkbar. Insbesondere ist die Form der Öffnung 11 nicht auf eine eckige, insbesondere keine viereckige Form begrenzt. Vielmehr sind auch mehreckige oder runde und andere Formen denkbar. Auch müssen die Schenkel 12 nicht geradlinig verlaufen, sondern könnten in einer Wellenform oder gekrümmt verlaufen. Gleiches gilt für die Schenkel 13. Ferner verlaufen die Schenkel 12 bei der dargestellten Ausführungsform und bei der Integration in eine Instrumententafel 30 im wesentlichen in einer horizontalen Richtung, d. h. von links nach rechts. Mit anderen Worten ist ihre Haupterstreckung horizontaler Natur.

Die Stäbe 20 können gleichfalls aus Kunststoff oder aber Metall gebildet sein. Die Stäbe können einen runden (kreisrunden, ovalen oder ähnlichen) Querschnitt aufweisen oder aber einen eckigen Querschnitt, wobei sie breiter als hoch (flach) ausgestaltet sein können. Darüber hinaus sind die Stäbe 20 jeweils als bistabiles System ausgebildet, d. h. sie weisen zwei stabile Zustände auf, die Ausgangslage und die Endlage. Dabei ist die Ausgangslage, wie es aus Figur 2 ersichtlich ist, vorzugsweise derart gewählt, dass die Oberseite der Stäbe 21 mit den Oberseiten 15 des Rahmens 10 sowie der Oberseite der Instrumententafel 30 fluchtet, so dass in der Ausgangslage eine geschlossene Oberfläche entsteht. Durch Aufbringen eines Impulses sind die Stäbe jeweils von der einen in die andere Lage zu bringen, sind in Zwischenpositionen aber instabil und federn je nach Zwischenposition entweder in die Ausgangslage oder in die Endlage (selbsttätig). Zur Auslegung dieses Systems dienen die Euler' schen Knickfälle sowie die Balkentheorie.

In Figur 2 befindet sich der Stab 20₂ in der Endlage während sich der Stab 20₁ in der Ausgangslage befindet. Gleichermaßen befinden sich die Stäbe 20₃ und 20₆ in Figur 1 in der Endlage, während sich die Stäbe 20₄ und 20₅ in der Ausgangslage befinden. Um sich von der Ausgangslage in die Endlage bewegen zu können, müssen die Stäbe eine Zwischenposition durchschreiten, in denen ihre Längserstreckung zwischen den Schenkeln 12 größer ist als in den jeweiligen End- bzw. Ausgangsstellungen. Diese Länge muss entweder durch das Material der Stäbe ausgleichbar sein oder aber eines bzw. beide Enden der Stäbe 20 müssen in ihrer Längsrichtung im Rahmen 12 verschieblich gelagert bzw. geführt sein. Zusätzlich können die Enden auch um eine Achse senkrecht zur Längserstreckung der Stäbe und/oder parallel zu den Schenkeln 12 drehbar gelagert sein. Die überschüssige Länge in der Zwischenposition kann beispielsweise bei einer einstückigen Gestaltung der Stäbe 20 mit dem Rahmen 10 auch durch ein Filmscharnier oder eine Verformung der Stäbe erfolgen.

Alternativ zu einer Biegung erster Ordnung, wie sie in Figur 2 dargestellt ist, sind auch Biegelinien zweiter Ordnung (oder höher) denkbar, wie sie in Figur 3 dargestellt sind. Hierfür ist jedoch eine Verschiebung beider Enden und eine drehbare Anordnung beider Enden erforderlich.

Um die Stäbe 20 aus ihrer Ausgangslage in die Endlage oder aus der Endlage in die Ausgangslage zu bringen, kann manuell auf die Stäbe eingewirkt werden bis diese die Zwischenposition durchschreiten und in die Endlage federn. Ist die Instrumententafel 30 und damit der Rahmen 10 von unten zugänglich, können die Stäbe auf die gleiche Weise aus der Endlage in die Ausgangslage zurückgedrückt werden. Alternativ ist es denkbar von oben an den Stäben 20 zu zehen,' um diese von der Endlage in die Ausgangslage zurückzubringen, wobei die Stäbe in diesem Fall als Handhabe dienen oder zusätzlich und, wie nicht dargestellt, mit einer entsprechenden Ausgestaltung und der Formgebung als Handhabe ausgestaltet sind, z. B. eine Grifflasche, ein Stellrad oder einen Stellhebel aufweisen. Alternativ können auch Laschen, Ösen oder Schlaufen an einer nicht dargestellten Bespannung vorgesehen, z. B. angenäht sein.

Eine solche Bespannung wird vorteilhafterweise zur Bildung einer geschlossenen Oberfläche über den Rahmen 10 und die Stäbe 20 gezogen. Dabei kann die Bespannung lose auf den Stäben 20 bzw. deren Oberseite 21 (Figur 2) aufliegen.

Alternativ wäre es auch denkbar, dass die Bespannung auf der Oberseite 21 der Stäbe 20 befestigt bzw. mit diesen verbunden ist.

Alternativ könnte die Bespannung auch unter den Stäben vorgesehen sein, wäre in diesem Fall jedoch vorzugsweise mit der Unterseite 22 der Stäbe verbunden.

Neben der manuellen Betätigung der Stäbe wäre es auch denkbar eine automatische Stelleinrichtung (nicht dargestellt) vorzusehen. Für diesen Fall ist es denkbar entweder einen Antrieb vorzusehen, der die Stäbe an wenigstens einem Ende 24 in Längsrichtung der Stäbe, d. h. in einer Richtung zwischen den Schenkeln 12 verschiebt und/oder die Stäbe um eine Achse 23 parallel zu den Schenkeln 12 bzw. senkrecht zur Längserstreckung der Stäbe entlang der Richtung A verdreht, insbesondere über die Zwischenposition hinaus verdreht, so dass die Stäbe die Ausgangs- oder Endlage einnehmen können.

Alternativ ist es auch denkbar die Stäbe 20 zumindest teilweise aus einem Formgedächtnismaterial zu bilden und die Stelleinrichtung so zu gestalten, dass sie eine Aktivierungseinrichtung zur Aktivierung des Formgedächtnismaterials umfasst. In diesem Fall ist insbesondere ein Zweiweg-Effekt zu wählen, bei dem die Formgedächtnislegierung einmal die Form in der Ausgangslage und einmal die Form in der Endlage einnimmt. Die Aktivierungseinrichtung kann dabei eine thermische Einrichtung sein, die die Stäbe entsprechend erwärmt bzw. abkühlt oder aber die Erwärmung bzw. Abkühlung spannungsinduziert herbeiführt, z. B. durch Anlegen einer Spannung, eines Magnetfelds, etc.

Bevorzugterweise ist des Weiteren eine Eingabevorrichtung (nicht dargestellt) vorzusehen, über die ein Benutzer die Stäbe unabhängig voneinander auswählen und in die End- oder Ausgangslage bewegen kann. Auch sind gewisse Stellungsmuster denkbar, die gespeichert und über die Eingabevorrichtung ausgewählt werden können, wie es eingangs bereits erläutert wurde.

Ferner ist es denkbar eine (nicht dargestellte) Spannvorrichtung vorzusehen, die es ermöglicht die Vorspannung der Stäbe einzustellen. Auch ist es denkbar die Stäbe 20 und/oder den Rahmen 12 zu umschäumen oder aus Schaumstoff herzustellen, um Stäbe und Rahmen zu versteifen und hinsichtlich der Haptik zu verbessern. Des Weiteren kann es bevorzugt sein über der Schaumstoffschicht bzw. dem Schaumstoff eine Dekorschicht vorzusehen, die beispielsweise durch die Bespannung gebildet werden kann oder aber durch eine andere Schicht, wie beispielsweise eine Makrolon®-Schicht.

Bei der Ausgestaltung in Figur 4 besteht der einzige Unterschied darin, dass entweder keine Bespannung vorzusehen ist, jedoch die Öffnung 11, die durch den Rahmen 12 definiert wird, durch einen formstabilen Boden 14 verschlossen ist oder aber eine Bespannung zwischen einem jeweiligen Stab 20 und den Schenkeln 12 und/oder 13. Ein weiterer Unterschied besteht darin, dass die Schenkel 12 im Wesentlichen in vertikaler Richtung von oben nach unten verlaufen.

In der Endlage liegen die Stäbe beispielsweise am Boden 14 an.

Im Folgenden wird unter Bezugnahme auf die Zeichnungen Figuren 1, 2 und 4 die Funktion der erfindungsgemäßen Ablage erläutert.

Je nach Wunsch des Benutzers können eine oder mehrere der Stäbe 20₁ bis 20₆ aus der Ausgangslage in die Endlage gebracht bzw. bewegt werden. Bei der in Figur 1 dargestellten Ausführungsform befinden sich die Stäbe 20₂ und 20₃ sowie 20₆ in der Endlage, während sich die Stäbe 20₁, 20₄ und 20₅ in der Ausgangslage befinden. Dadurch wird zwischen den Stäben 20₁ und 20₄ ein offenes Behältnis gebildet und zwischen dem Stab 20₅ und dem Schenkel 13 ein weiteres offenes Behältnis. Diese offenen Behältnisse dienen der Ablage von Gegenständen und bilden eine Art Mulde in der Instrumententafel 30. Die offenen Behältnisse sind durch die Stäbe 20₅ und 20₄ voneinander getrennt. Alternativ ist es auch denkbar alle Stäbe 20₁ bis 20₆ in die Endlage zu bringen, wobei ein großes offenes Behältnis bzw. eine große Mulde und damit eine große Ablagefläche entsteht. Eine weitere Alternative wäre alle Stäbe 20₁ bis 20₆ in die Ausgangslage zu bringen, wodurch insbesondere bei Vorsehen einer Bespannung über den Stäben 20, dem Rahmen 10 und der Instrumententafel 30 eine vollständig geschlossene kontinuierliche Oberfläche mit einem ansprechenden äußeren Erscheinungsbild entsteht. Diese Beispiele sind selbstverständlich nicht abschließend und die Stäbe 20₁ bis 20₆ können unabhängig voneinander in die Endlage bzw. in die Ausgangslage gebracht werden, um verschiedenartige Topographien zu bilden. Dies kann dabei manuell oder motorisch, wie es oben beschrieben wurde, erfolgen.

Bei der Ausgestaltung in Figur 4 befinden sich die Stäbe 20₁ und 20₂ in der Ausgangslage, während sich die Stäbe 20₃ und 20₄ in der Endlage befinden. Dadurch wird durch die Stäbe 20₁ und 20₂ eine Aufnahme für ein Gefäß, z. B. eine Getränkedose 40, gebildet, die in der Ablage aufgenommen werden kann. Je nach Höhe des Behältnisses können mehr oder weniger Stäbe 20 in die Ausgangslage bzw. die Endlage gebracht werden, um ein sicheres Halten des Behältnisses zu gewährleisten. Hier wäre es besonders bevorzugt die Stäbe anders als dargestellt besonders breit und mit nur einem geringen Zwischenraum zwischen den Stäben auszugestalten, so dass sich die Stäbe, wenn keine Getränkedose aufzunehmen ist und alle Stäbe 20 in der Ausgangslage angeordnet sind, eine im Wesentlichen geschlossene kontinuierliche Oberfläche ergibt.

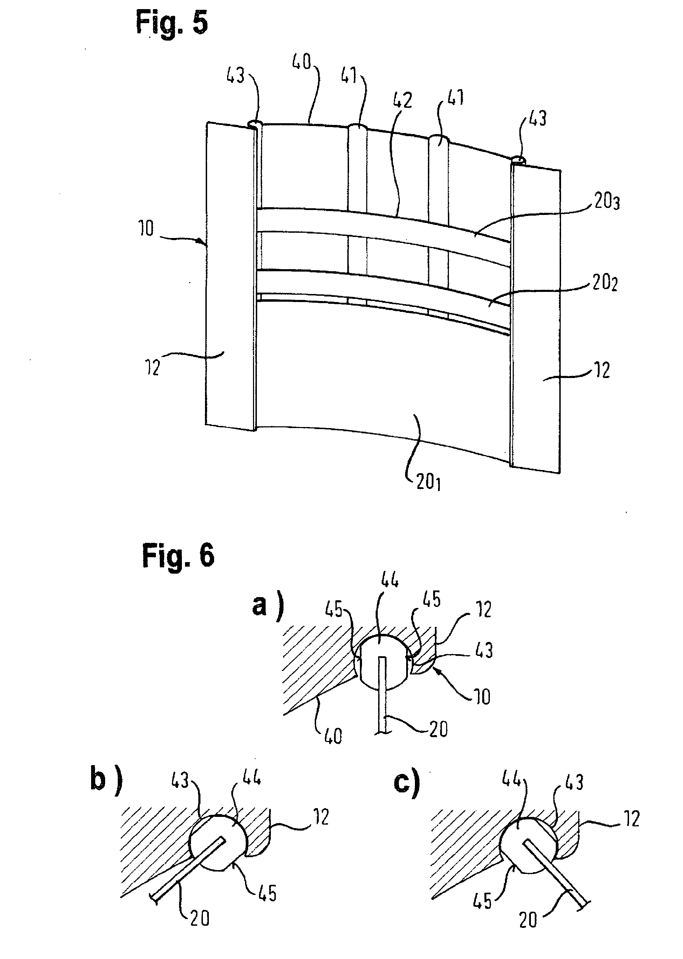

Figur 5 zeigt eine Ausgestaltung der vorliegenden Erfindung vergleichbar zu der in Figur 4. Der Rahmen 10 weist die gegenüberliegenden Schenkel 12 auf zwischen denen sich bei der dargestellten Ausführungsform drei Stäbe 20₁-20₃ erstrecken. Die Stäbe 20₁-20₃ befinden sich in Figur 5 in der Ausgangslage. Zwischen den Schenkeln 12 erstreckt sich hinter dem Rahmen 10 eine konkav gekrümmte Rückwand 40, die entsprechend an die Krümmung der Stäbe 20 in der dargestellten Ausgangslage angepasst ist. Die Stäbe 20 liegen, wie in Figur 5 dargestellt, dabei bündig an der nach außen weisenden Seite der Rückwand 40 an. In der Rückwand 40 sind zwei Fingermulden 41 vorgesehen, die im Querschnitt einen Teilkreis bilden. Die Fingermulden 41 in Figur 5 erstrecken sich parallel zu den Schenkeln 12 des Rahmens 10 entlang derer gesamten Länge. Ferner befinden sich diese Griffmulden zwischen dem Scheitelpunkt 42 der jeweiligen Stäbe 20 und den jeweiligen Führungen 43 an den Enden der Stäbe 20. Dort sind die Betätigungskräfte am geringsten und ermöglichen somit eine leichte Bewegung der Stäbe zwischen der dargestellten Ausgangslage und der Endlage.

Die Führungen sind bei der dargestellten Ausführungsform als Hohlkehle im Rahmen 10 bzw. zwischen dem Rahmen 10 und der Rückwand 40 ausgestaltet. Die Enden der Stäbe 20 weisen jeweils zylinderförmige Lagerungen auf, die mit den Stäben 20 einstückig verbunden oder verklebt sein können. Die Zylinder 44 sind in den Führungen 43 geführt, wie dies am besten aus Figur 6 ersichtlich ist. Durch die Vorspannung der Stäbe 20 verspreizen sich die Stäbe quer zu den Führungen 43, so dass sie Kräfte in Führungsrichtung aufnehmen können und moderat belastete Fachböden nicht zum Verrutschen des Elements führen.

Der Schwenkwinkel von der dargestellten Ausgangslage in die Endlage ist in der Regel deutlich kleiner als 180°. Um ein Herausreißen des Zylinders 44 aus der Führung 43 bei Missbrauch oder im Crashfall zu verhindern, kann die Führung den Zylinder 44, wie in Figur 6 dargestellt um mehr als 180° umschließen. Um dennoch das Austauschen von Stäben oder das Montieren bei oben und unten geschlossenen Führungen 43 zu ermöglichen, kann der Zylinder 44 an gegenüberliegenden Seiten 45 abgeflacht sein. Dadurch ist der Zylinder 44 in einer Montageposition, wie sie in Figur 6a dargestellt ist, aus der Führung 43 entnehmbar oder in diese einführbar, um die Stäbe 20 austauschen und montieren zu können. In der in Figur 6b dargestellten Ausgangslage hingegen ist der Zylinder 44 sicher in der Führung 43 gehalten. Gleiches gilt für die in Figur 6c dargestellte Endlage. Beim Bewegen aus der Ausgangslage in die Endlage, d. h. beim Durchschnappen der Stäbe 20 wird die Montageposition durchlaufen, wobei jedoch die Querkräfte, wie erwähnt, für das Andrücken der Zylinder 44 in die Führungen 43 sorgen und somit ein Herausrutschen in diesem Fall nicht möglich ist. In der End- und Ausgangslage werden die Zylinder 44 sicher umschlossen und dadurch am Herausrutschen gehindert. Alternativ wären auch Schnappverbindungen denkbar, wobei die Führungen 43 in diesem Fall nur wenig größer als 180° ausgestaltet wären und die Lager durch Vollzylinder gebildet sind, die durch Aufspreizen der Führungen einschnappbar sind.

Wie es aus Figur 5 weiter ersichtlich ist, verlaufen die Führungen vollständig entlang der Schenkel 12 und sind damit durchgehend gestaltet. Dadurch ist es möglich die einzelnen Stäbe 20₁-20₃ entlang der Führungen und damit der Schenkel 12 zu verschieben.

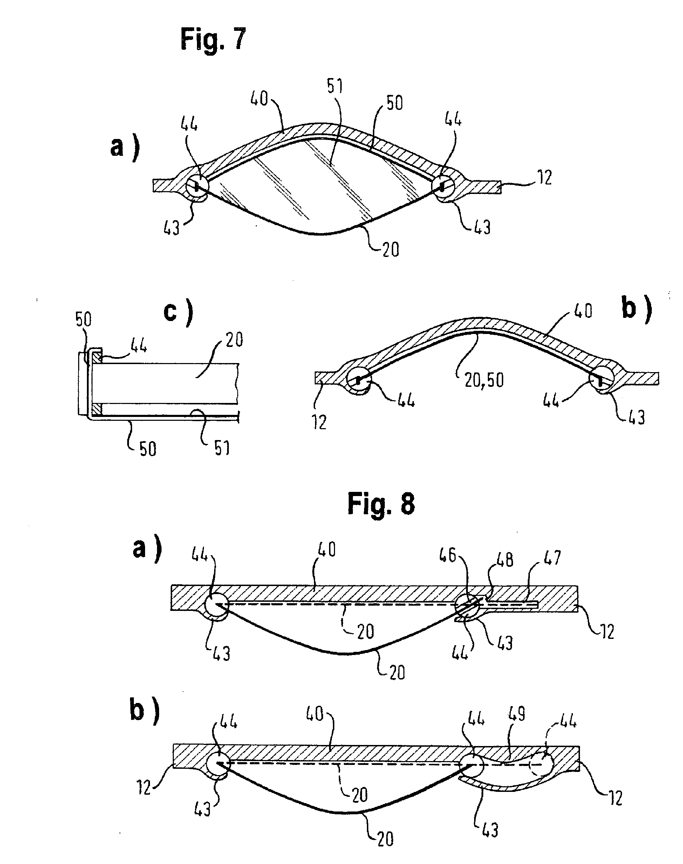

Um dies auch bei Stäben zu gestatten, die einen flexiblen Boden 51 aufweisen, muss der Boden 51 zusammen mit dem Stab 20 verschiebbar sein. Um dies zu realisieren, kann, wie in Figur 7 dargestellt, eine Halterung 50, hier in Form eines gebogenen Drahts, so mit den Lagern, hier den Zylindern 44, verbunden sein, dass eine Rotation der Zylinder 44 in den Führungen 43 nicht zu einer Rotation der Halterung 50 führt. Vielmehr kann sich der Zylinder 44 relativ zu der Halterung 50 verdrehen. Dies kann, wie in Figur 7c dargestellt, dadurch realisiert werden, dass die Halterung 50 lose entlang der Längsrichtung des zylinderförmigen Lagers 44 in einer zentrierten Durchgangsbohrung aufgenommen ist und lediglich auf der in Vertikalrichtung oberen Stirnseite des Zylinders 44 in Vertikalrichtung gegen ein Herausrutschen nach unten gehalten wird. In Figur 7c erfolgt dies oben durch Aufliegen auf der Stirnseite des Zylinders 44, so dass bei eingelegtem Gegenstand auf den Boden 51 eine sichere Abstützung gewährleistet ist. Mit der Halterung 50 ist ein dehnbarer Boden 51 verbunden. D. h. eine Seite des Bodens 51 ist mit der Halterung 50 verbunden, während die gegenüberliegende Seite mit einer in Vertikalrichtung Unterkante des Stabs 20 verbunden ist. Bewegt sich der Stab 20 aus der in Figur 7b dargestellten Ausgangslage in die in Figur 7a dargestellte Endlage, so hält die Halterung 50, hier der gebogene Draht, die eine Seite des Bodens 51 benachbart zur Rückwand 40, während der Stab 20 die gegenüberliegende Seite des Bodens 51 von der Rückwand weg zieht und den Boden 51 dadurch dehnt. Dadurch wird eine oben offene Ablage geschaffen. Ein solcher Stab 20₁ wird vorzugsweise in Figur 5 ganz unten verwendet, nämlich für den Stab 20₁. Ein solcher breiter Stab 20₁ kann zusätzlich gelocht oder durchbrochen werden, um die Betätigungskräfte moderat zu halten, wie es zuvor beschrieben wurde. Eine dünne flexible Bespannung des Stabs 20₁ mit Folien, Stoffen etc. kann für Blickdichtigkeit sorgen.

Vorteilhafterweise kann auch der Stab 20₂ mit einem derartigen flexiblen Boden 51 versehen sein, so dass die Öffnung des Behältnisses, das durch den Stab 20₁ in der in Figur 7a dargestellten Stellung erzielt wird, durch Bringen des Biegestabs 20₂ in die Endlage und dessen Boden 51 verschlossen werden kann. Zusätzlich würde eine oben offene Ablage durch den zweiten Stab 20₂ mit dem flexiblen Boden 51 gebildet werden. Der in Figur 5 dritte Stab 20₃ dient ferner dazu Gegenstände einzuklemmen, wozu der Stab 20₃ in die Endlage gebracht wird. Im Anschluss werden Gegenstände z. B. eine Straßenkarte oder beliebige andere Gegenstände zwischen die Innenseite des Stabs 20₃ und die Rückwand 40 gebracht, wonach eine Bewegung von der Endlage hin zur Ausgangslage erfolgt und der Gegenstand zwischen der Innenseite des Stabs 20₃ und der Rückwand 40 eingeklemmt wird. Dieser Stab 20₃ wäre damit vergleichbar mit einem Halteband. Durch die Verschiebbarkeit der einzelnen Stäbe 20₁-20₃, wie sie oben erwähnt wurde, ist es darüber hinaus denkbar die Stäbe relativ zueinander in Vertikalrichtung zu verschieben, wozu die Zylinder 44 in der Führung 47 längs verschoben werden können oder in der Montageposition zunächst gelöst und in anderer Position wieder montiert werden.

Gemäß einer weiteren Ausführungsform ist es auch denkbar die Rückwand 40 nicht konkav gekrümmt, sondern geradlinig auszugestalten, wie es in Figur 8 dargestellt ist. Um eine Behinderung des Durchschnappens der Stäbe 20 zwischen den zwei bistabilen Lagen nicht zu behindern, ist es bevorzugt die Stäbe 20 zumindest einseitig verschiebbar zu gestalten. Dies ist auch dann einsetzbar, wenn die Rückwand 40 leicht konvex gekrümmt ist und ist insbesondere deshalb notwendig, weil die Stäbe nicht wesentlich längs dehnbar, sondern nur biegeelastisch sind. Wie in Figur 8a kann die Verschiebbarkeit beispielsweise dadurch gelöst werden, dass der mit dem Stab 20 an einem Ende verbundene Zylinder 44 eine der Form der Querschnittsform des Stabs 20 angepassten Aussparung 46 aufweist, durch die das Ende des Stabs 20 dringt.. D. h. das Ende des Stabs 20 kann sich relativ zu dem Zylinder 44 und damit der Lagerung verschieben. In Figur 8a ist der Stab 20 in durchgezogener Linie in der Endlage dargestellt und in der gestrichelten Linie in der Ausgangslage. Ferner ist im Bereich der Führung 43 eine Aussparung 47 zur Aufnahme des Endes des Stabs 20 in der Ausgangslage ausgebildet und eine Vertiefung 48, die die Relativverschiebung des Endes des Stabs 20 in der Endlage begrenzt. Wird der Stab 20 aus der in Figur 8a dargestellten (mit durchgezogener Linie gezeigten) Endlage in die Ausgangslage (gestrichelt dargestellt) bewegt, so bewegt sich das Ende des Stabs 2.0 in die Vertiefung 47, um so ein enges Anliegen des Stabs 20 an der Rückwand 40 zu gewährleisten.

Alternativ ist es wie in Figur 8b dargestellt auch denkbar die Führung 43 so zu gestalten, dass das Lager 44 selbst im Wesentlichen parallel zur Rückwand 40 verschiebbar ist. Hierzu ist eine Führung in der Führung 43 vorgesehen, die einen Nocken 49 umfasst, der beim Bewegen von der Ausgangsin die Endlage und umgekehrt zu überfahren ist. Wird der Stab 20 in Figur 8b aus der mit durchgezogener Linie dargestellten Endlage in die gestrichelt dargestellte Ausgangslage bewegt, so bewegt sich das Lager 44 bei entsprechender Kraftaufwendung über den Nocken 49 bis der Stab 20 eng an der Rückwand 40 anliegt.

Beim Bewegen des Stabs 20 jeweils aus der Ausgangslage in die Endlage kehrt sich der Vorgang in den Figuren 8a und 8b lediglich um.

Die vorliegende Beschreibung beispielhafter Ausführungsformen ist selbstverständlich nicht abschließend und dem Fachmann werden vielerlei Modifikationen und andere Anwendungsfälle der vorliegenden Erfindung ersichtlich sein. Insbesondere ist die Erfindung z. B. nicht auf die Anzahl der vorgesehenen Stäbe begrenzt. Lediglich müssen wenigstens zwei Stäbe vorhanden sein, bevorzugterweise sind es jedoch drei oder mehr, da durch die Anzahl der Stäbe die Adaptivität der Ablage erhöht werden kann.

## Patentansprüche

1. Ablage insbesondere für Fahrzeuge, umfassend einen Rahmen (10) mit gegenüberliegenden Schenkeln (12, 13), der eine Öffnung definiert; und
mehrere Stäben (20), die jeweils als bistabiles System ausgebildet sind, **dadurch gekennzeichnet, dass** sich die Stäbe (20) jeweils von einem der gegenüberliegenden Schenkel (12) - des Rahmens (10) die öffnung überspannend zu dem anderen der gegenüberliegenden Schenkel (12) erstrecken und unabhängig voneinander zwischen einer Ausgangslage und einer Endlage bewegbar sind.

2. Ablage nach Anspruch 1, ferner umfassend eine Rückwand hinter dem Rahmen, wobei die Stäbe in der Ausgangslage oder der Endlage an der Rückwand anliegen.

3. Ablage nach Anspruch 2, wobei in der Rückwand wenigstens eine Mulde vorgesehen ist, die ein Eingreifen zwischen die Rückwand und wenigstens einen der Stäbe gestattet, um die Stäbe zwischen der Ausgangslage und der Endlage zu bewegen.

4. Ablage nach einem der vorstehenden Ansprüche, bei dem eine Lagerung der Stäbe durch ein zylinderförmiges Element gebildet ist, das in einer Führung drehbar aufgenommen ist.

5. Ablage nach Anspruch 4, bei der die Führung das zylindrische Element um mehr als 180° umschließt.

6. Ablage nach Anspruch 5, wobei das zylindrische Element beidseits abgeflacht ist, um das zylindrische Element in einer Montageposition zwischen der Ausgangslage und der Endlage aus der Führung entnehmen zu können.

7. Ablage nach einem der vorstehenden Ansprüche, ferner umfassend eine Stelleinrichtung zum automatischen Bewegen der Stäbe (20) zwischen der Ausgangslage und der Endlage.

8. Ablage nach Anspruch 7, bei der die Stelleinrichtung einen Antrieb umfasst über den wenigstens ein Ende des jeweiligen Stabs oder dessen Lagerung in Längsrichtung des jeweiligen Stabes verschiebbar und/oder um eine Achse (23) senkrecht zur Längserstreckung verdrehbar ist, um den Stab zwischen der Ausgangslage und der Endlage zu bewegen.

9. Ablage nach Anspruch 7, bei der die Stäbe (20) zumindest teilweise aus einem Formgedächtnismaterial gebildet sind und die.Stelleinrichtung eine Aktivierungseinrichtung zur Aktivierung des Formgedächtnismaterials umfasst, um die Stäbe (20) zwischen der Ausgangslage und der Endlage zu bewegen.

10. Ablage nach einem der Ansprüche 7 bis 9, bei der die Stelleinrichtung ein Eingabegerät umfasst über den einzelne Stäbe (20) unabhängig voneinander auswähl- und bewegbar sind und/oder vordefinierte Stellungsmuster der Stäbe (20) zueinander auswählbar sind.

11. Ablage nach einem der vorstehenden Ansprüche, bei der der Rahmen (10) und die Stäbe (20) einstückig ausgebildet sind.

12. Ablage nach einem der Ansprüche 1 bis 10, bei der die Stäbe (20) separat vom Rahmen (10) ausgebildet sind und bevorzugt eine Spannvorrichtung vorgesehen ist, über die die Vorspannung der Stäbe (20) gegenüber dem Rahmen (10) einstellbar ist.

13. Ablage nach einem der vorstehenden Ansprüche, bei der der Rahmen (10) und/oder die Stäbe (20) mit einer Schaumstoffschicht umschäumt sind oder aus einem Schaumstoff bestehen.

14. Ablage nach Anspruch 13, bei der Rahmen (10) und/oder die Stäbe (20) eine die Schaumstoffschicht bzw. den Schaumstoff überdeckende Beschichtung aufweisen.

15. Ablage nach einem der vorstehenden Ansprüche, bei der die durch den Rahmen (10) definierte Öffnung (11) eine gekrümmte Ebene beschreibt und die Stäbe (20) in Ihrer Ausgangslage in der gekrümmten Ebene liegen.

## Claims

1. Storage area, in particular for vehicles, comprising
a frame (10) having opposed side pieces (12, 13), which defines an opening; and several rods (20) which are in each case designed as a bistable system, **characterised in that** the rods (20) in each case extend from one of the opposed side pieces (12) of the frame (10) to the other one of the opposed side pieces (12), spanning the opening, and are movable independently of each other between a starting position and a final position.

2. Storage area according to claim 1, further comprising a rear wall behind the frame, wherein the rods abut against the rear wall in the starting position or the final position.

3. Storage area according to claim 2, wherein in the rear wall is provided at least one depression which allows access between the rear wall and at least one of the rods in order to move the rods between the starting position and the final position.

4. Storage area according to any of the preceding claims, in which a mounting of the rods is formed by a cylindrical element which is held rotatably in a guide.

5. Storage area according to claim 4, in which the guide surrounds the cylindrical element by more than 180°.

6. Storage area according to claim 5, wherein the cylindrical element is flattened on both sides in order to be able to remove the cylindrical element from the guide in an assembled position between the starting position and the final position.

7. Storage area according to any of the preceding claims, further comprising a final control device for automatically moving the rods (20) between the starting position and the final position.

8. Storage area according to claim 7, in which the final control device comprises a drive by means of which at least one end of the respective rod or its mounting is displaceable in the longitudinal direction of the respective rod and/or rotatable about an axis (23) perpendicularly to the longitudinal extent, in order to move the rod between the starting position and the final position.

9. Storage area according to claim 7, in which the rods (20) are at least partially composed of a shape memory material and the final control device comprises an activation device for activating the shape memory material in order to move the rods (20) between the starting position and the final position.

10. Storage area according to any of claims 7 to 9, in which the final control device comprises an input device by means of which individual rods (20) can be selected and moved independently of each other and/or predefined position patterns of the rods (20) relative to each other can be selected.

11. Storage area according to any of the preceding claims, in which the frame (10) and the rods (20) are constructed in one piece.

12. Storage area according to any of claims 1 to 10, in which the rods (20) are constructed separately from the frame (10) and preferably a tensioning device is provided, by means of which the initial tension of the rods (20) relative to the frame (10) is adjustable.

13. Storage area according to any of the preceding claims, in which the frame (10) and/or the rods (20) are surrounded with a layer of foam material or made of a foam material.

14. Storage area according to claim 13, in which the frame (10) and/or the rods (20) have a coating which covers the layer of foam material or the foam material.

15. Storage area according to any of the preceding claims, in which the opening (11) defined by the frame describes a curved plane and the rods (20) in their starting position lie in the curved plane.

## Revendications

1. Vide-poches, en particulier pour véhicules, comprenant :
un cadre (10) avec des côtés (12, 13) opposés, lequel définit une ouverture ; et
plusieurs barres (20) réalisées chacune comme système bistable, **caractérisé en ce que** les barres (20) s'étendent sur toute l'ouverture, de l'un des côtés (12) opposés du cadre (10) à l'autre des côtés (12) opposés, et sont déplaçables d'une position initiale vers une position finale indépendamment l'une de l'autre.

2. Vide-poches selon la revendication 1, comprenant en outre une paroi de fond derrière le cadre, les barres reposant contre la paroi de fond en position initiale ou en position finale.

3. Vide-poches selon la revendication 2, où au moins une gouttière est prévue dans la paroi de fond, laquelle permet un enclenchement entre la paroi de fond et au moins une des barres, pour pouvoir déplacer les barres entre la position initiale et la position finale.

4. Vide-poches selon l'une des revendications précédentes, où un palier est formé par un élément en forme de cylindre pour les barres, lequel est logé de manière rotative dans un guidage.

5. Vide-poches selon la revendication 4, où le guidage entoure le cylindre sur plus de 180°.

6. Vide-poches selon la revendication 5, où le cylindre est aplati de part et d'autre, pour permettre le retrait dudit cylindre hors du guidage dans une position de montage entre la position initiale et la position finale.

7. Vide-poches selon l'une des revendications précédentes, comprenant en outre un dispositif de réglage pour le déplacement automatique des barres (20) entre la position initiale et la position finale.

8. Vide-poches selon la revendication 7, où le dispositif de réglage comprend un entraînement au moyen duquel au moins une extrémité de chaque barre ou son palier sont déplaçables dans la direction longitudinal de la barre et/ou rotatifs autour d'un axe (23) perpendiculaire à l'extension longitudinale, pour pouvoir déplacer la barre entre la position initiale et la position finale.

9. Vide-poches selon la revendication 7, où les barres (20) sont constituées au moins partiellement d'un matériau à mémoire de forme et où le dispositif de réglage comprend un dispositif d'activation permettant d'activer le matériau à mémoire de forme, pour pouvoir déplacer les barres (20) entre la position initiale et la position finale.

10. Vide-poches selon l'une des revendications 7 à 9, où le dispositif de réglage comprend un appareil de saisie au moyen duquel différentes barres (20) peuvent être sélectionnées et déplacées indépendamment les unes des autres et/ou des modèles de position prédéfinis peuvent être sélectionnés pour les barres (20).

11. Vide-poches selon l'une des revendications précédentes, où le cadre (10) et les barres (20) sont réalisés d'une seule pièce.

12. Vide-poches selon l'une des revendications 1 à 10, où les barres (20) sont réalisées séparément du cadre (10) et où un mécanisme de serrage est préférentiellement prévu, au moyen duquel la contrainte des barres (20) peut être réglée par rapport au cadre (10).

13. Vide-poches selon l'une des revendications précédentes, où le cadre (10) et/ou les barres (20) sont enrobées d'une couche de mousse, ou sont en mousse.

14. Vide-poches selon la revendication 13, où le cadre (10) et/ou les barres (20) présentent un revêtement recouvrant la couche de mousse ou la mousse.

15. Vide-poches selon l'une des revendications précédentes, où l'ouverture (11) définie par le cadre (10) définit un plan courbe, et où les barres (20) sont situées sur le plan courbe dans leur position initiale.
